# EUROPEAN PATENT SPECIFICATION

(11) **EP 3 802 039 B1**
(45) Date of publication and mention of the grant of the patent: **09.11.2022**
(21) Application number: 19739384.6
(22) Date of filing: 24.05.2019
(51) Int. Cl.: B29C 31/00, B21D 1/00, B21D 43/00

(54) **POSITIONING DEVICE FOR POSITIONING PIPES**
POSITIONIERUNGSVORRICHTUNG ZUR POSITIONIERUNG VON ROHREN
DISPOSITIF DE POSITIONNEMENT DE TUYAUX

(30) Priority: 28.05.2018 IT 201800005780
(43) Date of publication of application: 14.04.2021
(73) Proprietor: SICA S.P.A., 48011 Alfonsine (Ravenna) (IT)
(72) Inventor: TABANELLI, Giorgio, 48033 Cotignola, Ravenna (IT)
(74) Representative: Casadei, Barbara
(86) International application number: PCT/IB2019/054342
(87) International publication number: WO 2019/229611

(56) References cited:
- WO-A1-2018/073671
- AU-B2- 535 831

## Description

### Technical field

This invention relates to positioning device for positioning pipes.

In particular, the invention relates to a positioning device for positioning pipes in a machine for hot moulding end bells, which is also referred to as a belling machine.

### Background art

For the production of pipes by thermoplastic extrusion designed for making conduits for delivering and/or discharging fluids (used for example in the drainage networks and drinking water distribution networks of building works), belling machines are used for forming an end portion of the pipes into the characteristic "bell" shape.

This wider shape is used to connect the pipes in succession which form a conduit. An unshaped end of a pipe is normally inserted in the bell-shaped end of the adjacent pipe in the conduit.

The majority of belling machines currently used make the bell with the hot forming process. The machines are equipped with one or more heating stations to heat the end of the pipe, changing the wall to be shaped into a plastically deformable softened state.

Forming equipment then, by using a suitable mould, forms the heated end of the pipe into a bell shape and cools the bell shaped on the mould.

The most commonly used thermoplastic materials in pipe systems are unplasticised polyvinyl chloride (PVC-U), polypropylene (PP) and high-density polyethylene (HDPE).

The pipes constituting the systems of pipes installed in the drains inside buildings each have relatively small diameters and lengths. The most common external diameters for drainage pipes in buildings, regulated also by technical standards, are expressed in millimetres: 32, 40, 50, 63, 75, 90, 110, 125 and 160. Whilst the nominal length of the pipes, again in millimetres, are: 150, 250, 500, 750, 1000, 1500, 2000 and 3000.

The belling machine comprises a station for arrival of the cut pipes coming from the extrusion line; in this station, the machine, by means of automatic positioning devices, picks up the pipes and, with horizontal movement transversal to the direction of the extrusion line, positions them with the end of the pipe positioned in front of the heating unit and bell forming unit. When positioning the pipes in front of the operating stations, the axis of the pipe must coincide with the central axis of symmetry of the heating ovens and the forming moulds. These central axes of symmetry, also called working axes of the belling machines, are horizontal, parallel to the axis of extrusion, and normally positioned, relative to the supporting floor of the belling machine, at the same height as the axis of extrusion of the pipe.

In the belling machines designed to process long pipes, that is to say, drainage pipes or fluid supply pipes under pressure, the handling of the pipes occurs, normally, with the lifting and horizontal translation of the pipe by means of automatic translatory positioning devices which engage in the pipe from the bottom with simple supports shaped in the form of a 'V'. These pipes, at the end of the horizontal movement step, are deposited in suitable seats, also in the form of V-shaped cradles made in a supporting surface of the pipes, commonly called the bench. Apparatuses of this type are not suitable to be used in belling machines designed to process short pipes, such as drain pipes for buildings with a length of less than 500 mm, since the pipes lifted would not be sufficiently stable; in fact, the part of the pipe designed to enter in the heating ovens and in the mould for forming the bell cannot be engaged in the supports of the translatory devices, with the result than an extension of the pipe useful for the supporting would not be long enough to contain, with sufficient margin, the position of the barycentre of the pipe. Consequently, due to vibrations and/or oscillations induced by inertial forces, the pipe slides easily, and, losing contact with the supports, falls without control. For this reason, the belling machines designed to process short pipes are normally configured with a supporting and sliding surface for the pipe which is perfectly horizontal, and devices for moving the pipe which, coming from above, by using their gripping elements, clamp on the pipe and move it horizontally, always maintaining, during sliding and final positioning, the gripping and the supporting of the pipe in the horizontal plane of the bench.

In order for the gripping elements to be effective they must not allow relative slipping between pipe and gripping surface. In fact, the slipping is substantially rotational and longitudinal movements: these movements are undesired since they would adversely affect the correct alignment of the pipe in the heating stations and in the forming stations, with the result that the belling operation would be defective, if not even impossible.

Slipping between the pipe and gripping surface can also adversely affect the quality of the surface of the pipe which must be free of scratches and alterations in colour.

The pipes have external markings, printed in ink along the extrusion line, for identifying the technical type of the pipe, the batch and the production date. During contact with the surface of the pipe, the gripping elements and the sliding surfaces of the belling machine must not delete the markings or alter them with the generation of marks on the surface of the pipe.

Another significant technical feature of the positioning devices designed to move and grip the pipe is constituted by the transfer time of the pipe processed from one station to the next, which must be short in order not to adversely affect the productivity of the machine and to obtain a sufficient quality of the bell.

In fact, during the movement step, the heated end of the pipe is exposed to the ambient air and an exposure time in the air which is too long and not controlled can adversely affect the final quality of the bell produced. In fact, it is necessary to consider that the pipes for drains in buildings have a small thickness: consequently, the heating times in each station and the forming-cooling cycle time are very short. For example, a pipe made of PP with a 50 mm diameter and a wall thickness of 1.8 mm requires a process time for each station of approximately 10 seconds; a belling machine for pipes up to a maximum diameter of 160 mm has a translation interval between each station of approximately 450 mm; this space, for the reasons listed above, must be travelled along by the pipe in a time of not more than 2 seconds. Considering that the weight of the gripping elements conditions the accelerations and decelerations associated with the movements, it is easier to obtain short times with gripping elements having a reduced weight.

Gripping elements with a contact portion with a concave shape, equivalent to V-shaped planes which press the pipe against the horizontal supporting surface, are simple and easily adaptable to different diameters of the pipe, but they determine, with only three lines of contact, ideally tangential to the pipe, a reduced contact surface, in any case with an extension which is normally insufficient for locking the pipe during the transversal movements. The extent of the vertical clamping force which the gripping elements apply on the pipe against the horizontal sliding plane must not be exceeded, since, with the above-mentioned limited contact surface, a contact pressure which is too high could seriously damage the surface of the pipe or deform, in a permanent and unacceptable manner, the shape of the pipe.

It must also be considered that the plastic material forming the pipe possesses limited rigidity. This feature, and the small wall thicknesses typical of pipes for drains in buildings, makes the pipes easily deformable. The pipes whose length is greater than a metre, with a small diameter and thickness, are slim structures consisting of a plastic material with a low elasticity modulus; consequently, they are very flexible pipes, subject to bending and vibrating as a result of inertial forces which, during movement of the pipe, occur during the starting and arrival steps. These deformations and vibrations, if they are large in amplitude and if the pipe is not kept firmly gripped, induce rotations and axial movements which prevent correct performance of the belling process or they render it unrepeatable.

It is also necessary to take into account the fact that the processed pipe coming from the extrusion line does not have regular shapes, that is to say, the extruded pipe is never perfectly round and is never perfectly straight. Therefore, the irregular geometry of the shape of the hose, together with the reduced rigidity of the plastic material, also contributes to rendering inefficient the gripping systems with limited contact surface. Gripping elements are widely adopted in the belling machines which consist of shell-shaped semi-circular clamps which wrap around the pipe and engage the end of it close to the zone it which must be formed in the shape of a bell for an extension of approximately 500 mm. Naturally, the shells do not engage the zone of the pipe which must enter into the heating ovens and in the moulds for forming the bell.

For the pipes longer 500 mm, all the remaining part of the pipe is left free, simply resting on the sliding plane of the bench. Extending further the gripping zone towards the tail of the pipe would certainly render the locking of the long pipe more secure, but at the same time it would increase the weight of the transfer devices, thus adversely affecting the possibility of obtaining reduced times for transferring the pipes.

The above-mentioned shells are applied to devices for moving the pipes, in which the engagement and the detachment of the shells relative to the pipe is carried out by means of a vertical movement of the devices themselves. The vertical engaging or disengaging stroke is normally obtained by means of jacks (pneumatic or electrical or hydraulic). Generally speaking, the jacks are the elements which generate the thrust force on the pipe against the horizontal sliding plane.

Another important technical and operational aspect correlated with the shape of the gripper elements is their adaptability to the processing of pipes of different diameters.

The belling machine is in fact normally designed and used for processing pipes of different diameters.

The change of diameter results in the modification in height of the position of the horizontal sliding plane of the pipes, since the height of the position of the working axes of the machine, which normally coincide with the height of the extrusion axis, is a fixed dimension of the machine, which is unchangeable for any size of the pipe processed.

The change in diameter also results in the replacement of various items of equipment of the machine, such as, for example, the moulds for forming the bell, the metallic elements for contact heating of the pipe, etc.

The gripping elements shaped as semi-circular clamps have an inner shape in the pick up zone which is semi-circular characterised by a specific diameter equal to that of the pipe being processed; consequently, these gripping elements are also part of the accessories to be replaced when changing the diameter of pipe being processed.

Taking into account that the stations of belling machines for drain pipes normally comprise: a station for arrival of the pipe from the extrusion line, a station for accumulation in groups of pipes to be belled simultaneously, two or more heating stations, a station for forming the bell and a station for introducing the gasket in the seat of the formed bell, there are a total of six or more gripping elements to be procured and replaced for each diameter of pipe which it is planned to process.

The positioning devices also have a not insignificant cost, and a belling machine designed to work on all the classic sizes of drain pipes, that is to say, composed of nine different diameters, must be equipped with fifty four gripping elements.

Such a large number of elements means that the correlated logistics and maintenance costs are also not negligible. The gripping elements, in addition to their specific procurement cost, also require assembly and removal operations in the machine, the duration of which is in the order of approximately an hour for each change of diameter of the pipe.

If the weight of the gripping elements is significant, more than one operator and/or the aid of accessories for lifting loads are necessary for their fitting and removal.

Less widespread are the elements for gripping the pipe which can be automatically adapted by means of actuators for all or part of the diameters of the pipes which can be processed by the machine. They usually consist of clamps comprising two or more components which, by means of actuators, clamp on the pipe being gripped. These universal elements, as well as being complex and expensive, are penalised by the large transversal dimensions, which are not always compatible with the distances between the various operating stations.

The increase in weight correlated with the introduction of the actuators and relative drive mechanisms, on board the positioning devices carrying the gripping elements, also adversely affects the performance of the device in terms of time of execution of the movement cycle.

As the systems for movement of the pipes described above and the relative gripping elements are located in front of the heating and forming stations, they adversely affect the front access to these stations by the operator.

Accessibility by the operators is however necessary in order to carry out the usual size changeover operations for the pipe being processed or for normal maintenance of the machine. For this reason, the positioning devices delegated to the movement of the pipes are conveniently installed on a mobile structure which, during the operations for size changeover and maintenance, is raised by means of actuators which are normally electric and/or hydraulic.

Patent document WO 2018/073671 shows a device for positioning pipes of known type.

### Disclosure of the invention

The aim of this invention is to provide a positioning device for positioning pipes which is free of the drawbacks of the prior art listed above and is at the same time efficient to use.

A further aim of the invention is to provide a positioning device for positioning pipes which allows a practical adaptation to pipes of different diameters.

Another aim of the invention is to provide a positioning device for positioning pipes which is simple and inexpensive to make.

Yet another aim of the invention is to provide a positioning device for positioning pipes which is in its entirety light and simple to move.

These aims and others, which are more apparent in the description which follows, are achieved, in accordance with this invention, by a positioning device for positioning pipes comprising the technical features described in one or more of the appended claims.

### Brief description of the drawings

The technical features of the invention, with reference to the above aims, are clearly described in the claims below and its advantages are more apparent from the detailed description which follows, with reference to the accompanying drawings which illustrate a preferred, non-limiting embodiment of the invention by way of example and in which:
- Figure 1 shows a schematic perspective view of a preferred embodiment of a machine for conditioning pipes made of thermoplastic material on which are installed positioning devices according to the invention;
- Figures 2a, 2b, 2c show respective schematic perspective views of a positioning device according to the invention, engaged with pipes of three different dimensions;
- Figures 3a, 3b, 3c show schematic front elevation views of the positioning device of, respectively, Figures 2a, 2b, 2c;
- Figures 4a, 4b, 4c show, in different schematic front elevation views, a detail of the positioning device of, respectively, Figures 2a, 2b, 2c;
- Figure 5 shows a schematic front elevation view of the detail of Figures 4a, 4b, 4c for pipes of three different sizes;
- Figure 6 shows a schematic front elevation view of the detail of Figure 5 according to an relative improved embodiment;
- Figure 7 shows a cross-section along the plane VII-VII indicated in Figure 6;
- Figure 8 shows a schematic perspective view from below of the detail of Figure 6;
- Figure 9 shows a schematic front elevation view of the detail of Figure 8 engaged with a relative pipe.

### Detailed description of preferred embodiments of the invention

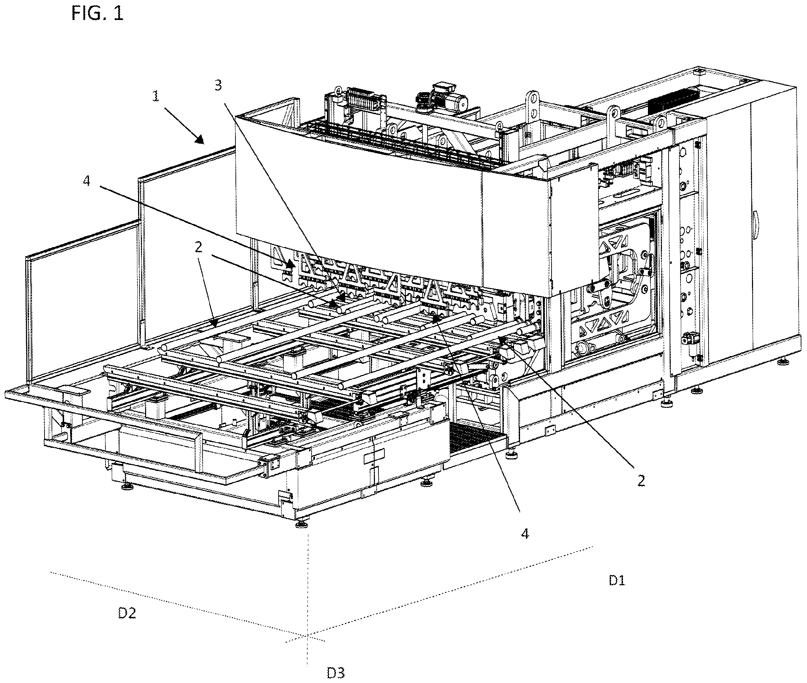

With reference to Figure 1, the numeral 1 denotes in its entirety a machine for processing pipes 2 made of thermoplastic material, in particular a so-called belling machine, that is to say, designed to form, in the pipes 2, respective end bells, made in accordance with the invention.

The machine 1 has a conveyor belt, not illustrated, extending along a predetermined first rectilinear direction D1, along the belt being fed pipes 2 coming from an extrusion line, also not illustrated, located upstream of the machine 1.

The machine 1 has a plurality of operating stations, of known type and not described further below in terms of their operational features, positioned side by side along a predetermined second direction D2 at right angles to the above-mentioned first direction D1.

In particular, there are normally at least one accumulation station, one or more stations for heating the end of the pipe 2 and a station for forming bells on the ends previously heated.

In this description the term "pipe" means, preferably, a piece of pipe made in known manner by cutting from a continuous pipe, produced by extrusion of thermoplastic material.

As illustrated in Figure 1, the machine 1 comprises a surface 3 for supporting and sliding the pipes 2 along the surface 3, the pipes 2 being held in a flat horizontal position and moreover having the possibility of sliding along the above-mentioned direction D2 to position, in succession, at the various operating stations.

The supporting surface 3 is movable vertically, according to a third direction D3 perpendicular to the ground and to both the directions D1 and D2.

The supporting surface 3 is of substantially known type and will not therefore be described further.

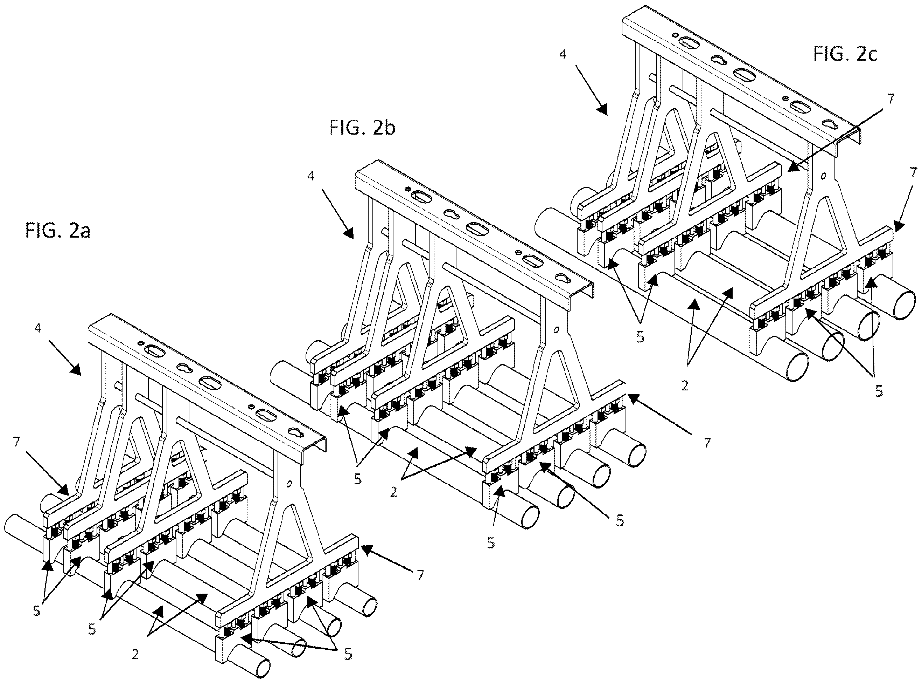

The machine 1 comprises, as shown in Figures 1 and 2, a positioning device 4 designed to pick up groups G of pipes 2 at the accumulation station and transfer them between the various operating stations of the machine 1, making them slide on the supporting surface 3 along the above-mentioned direction D2.

In particular, the positioning device 4 is designed both to pick up groups of pipes 2 from the accumulation station and transfer them between the above-mentioned further stations keeping the pipes 2 of the group are parallel to each other and to the first direction D1.

The positioning device 4 comprises a plurality of gripping elements 5, designed to put in contact above with the individual pipes 2.

Each gripping element 5 has a contact portion 6 with a concave shape, such as to guarantee an effective contact with pipes 2 of different diameters.

The above-mentioned gripping elements 5 are arranged side by side in succession according to the second predetermined direction D2, equal in number to the number of pipes 2 of the group G, thereby defining respective racks 7.

According the example embodiment 1 illustrated in the accompanying drawings 2a, 2b, 2c, 3a, 3b, 3c, the group of pipes 2 is formed by four pipes 2 and, consequently, there are also four gripping elements 5 making up each rack 7.

Advantageously, as illustrated in the accompanying drawings, the gripping elements 5 are supported elastically by the respective racks 7.

In a substantially known manner, and not illustrated, the positioning device 4 comprises many carriages for supporting the above-mentioned racks 7, the carriages being movable between the various accumulating and operating stations of the machine 1 on respective tracks, also of known type and not illustrated in detail, along the predetermined second direction D2.

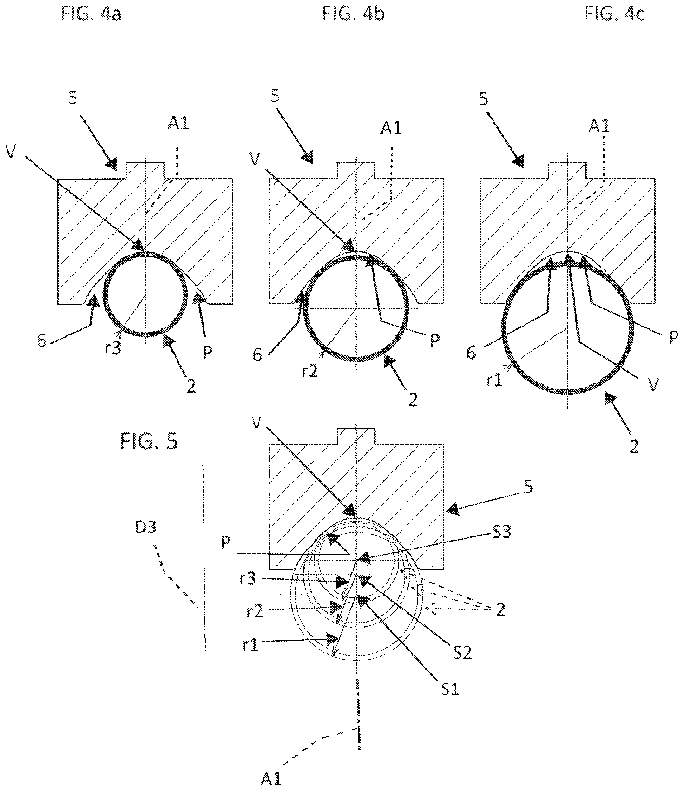

As illustrated in Figure 5, the gripping element 5 has a contact portion 6 with the pipe 2, the contact portion 6 having a concave saddle shape.

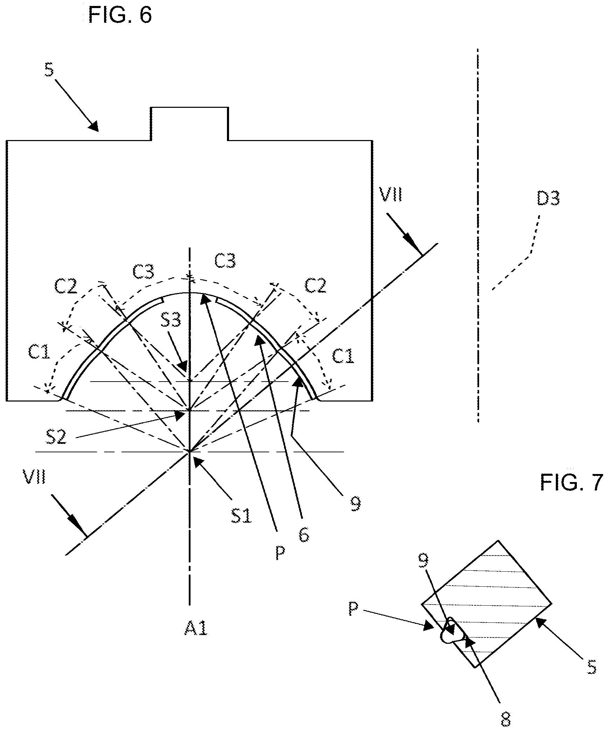

As indicated in Figure 6, the above-mentioned contact portion 6 has a profile P defined by the succession of circular arcs C1, C2, C3 having different radiuses of curvature R.

For the purposes of this description, the expression "circular arc" basically means a circumferential arc.

With reference in particular to Figures 5 and 6, the profile P of the contact portion 6 has a vertical axis A1 of symmetry which, in use on the machine 1, is parallel to the third direction D3.

The above-mentioned succession of circular arcs C1, C2, C3 defining the profile P comprises circular arcs of the same radius of curvature arranged in pairs symmetrical relative to the above-mentioned vertical axis A1 of symmetry.

Advantageously, according to the preferred embodiment illustrated in the accompanying drawings, and as may clearly be inferred from Figures 5 and 6, the circular arcs C1, C2, C3 of the same radius r1, r2, r3 of curvature defining the above-mentioned symmetrical pairs have a common centre s1, s2, s3 of curvature.

The centre of curvature s1, s2, s3 shared by the two circular arcs C1, C2, C3 of the same pair, lies, for each pair, on the above-mentioned axis A1 of symmetry.

In particular, as is also clearly illustrated in Figure 6, the centres s1, s2, s3 of curvature of the circular arcs C1, C2, C3 defining the above-mentioned symmetrical pairs having different radiuses r1, r2, r3 of curvature lie on the said vertical axis of symmetry at different heights.

With reference to the accompanying drawings, the profile P of the contact portion 6 of the gripping element 5 having a concave saddle shape has an upper vertex V.

The upper vertex V of the profile P lies on the vertical axis A1 of symmetry. As illustrated in Figure 6, the gripping element 5, shown by way of example, has a contact portion 6 having a profile P defined by three pairs of circular arcs C1, C2, C3 having radiuses r1, r2, r3 of curvature decreasing from the bottom upwards.

Generally speaking, in accordance with the preferred embodiment of the gripping element 5 described here and illustrated, the profile P of the contact portion 6 is symmetrical with respect to a vertical axis A1 of the gripping element 5 and formed by two or more pairs of arcs Cᵢ of radius rᵢ where rᵢ₊1<rᵢ with i =1...n n≥2.

Basically, the pair of circular arcs C3 of smaller diameter, passing through the upper vertex V, defines a single circular arc.

Figure 5 illustrates how the distance from the upper vertex V of the above-mentioned centres s1, s2, s3 of curvature of the circular arcs C1, C2, C3 of the three symmetrical pairs having different radiuses of curvature r1, r2, r3 increases with the increase of the respective radius of curvature r1, r2, r3.

According to the improved embodiment illustrated in Figures 6 to 8, the gripping element 5 has a recess 8 extending along the above-mentioned profile P.

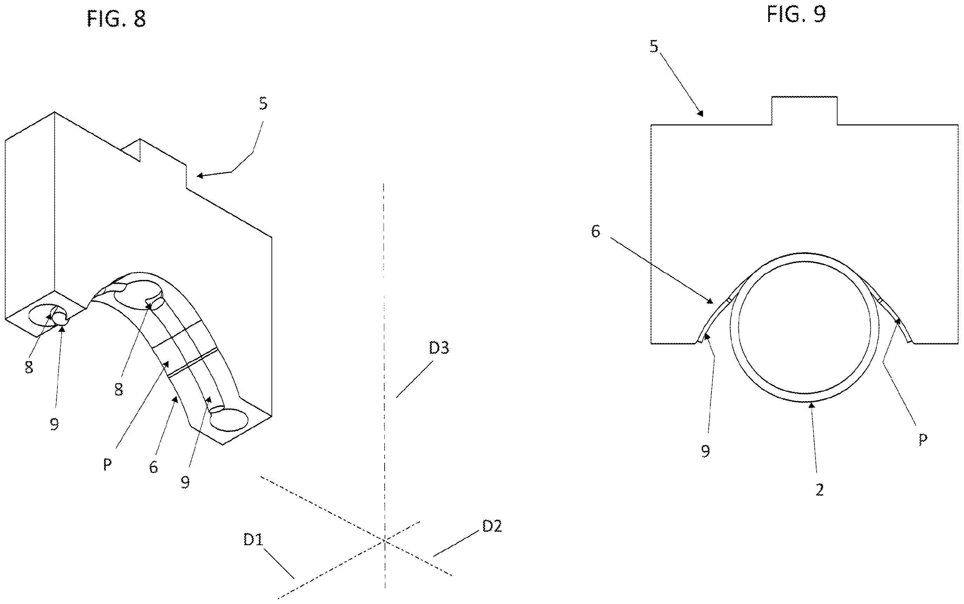

In particular, as illustrated in Figure 8, the above-mentioned recess 8 is advantageously made in an intermediate zone of the thickness of the gripping element 5 along the direction D1.

The recess 8, as illustrated in Figure 7, advantageously has a transversal cross section which is triangular or, alternatively, in the form of a dovetail. A strip 9 made of a material with a high friction coefficient is inserted inside the recess 8.

The strip 9 protrudes slightly from the overall dimensions of the profile P. The strip 9 has advantageously, but not necessarily, a circular transversal cross section.

As illustrated in Figure 9, the strip 9 is designed to engage by resting on a pipe 2 positioned below the respective gripping element 5 in such a way as to improve the contact between gripping element 5 and the pipe 2 during its movement.

Advantageously, the above-mentioned strip 9 is made of elastomeric material.

The elastomeric material advantageously accentuates the friction on the pipe 2, rendering very firm the gripping action on the pipe 2.

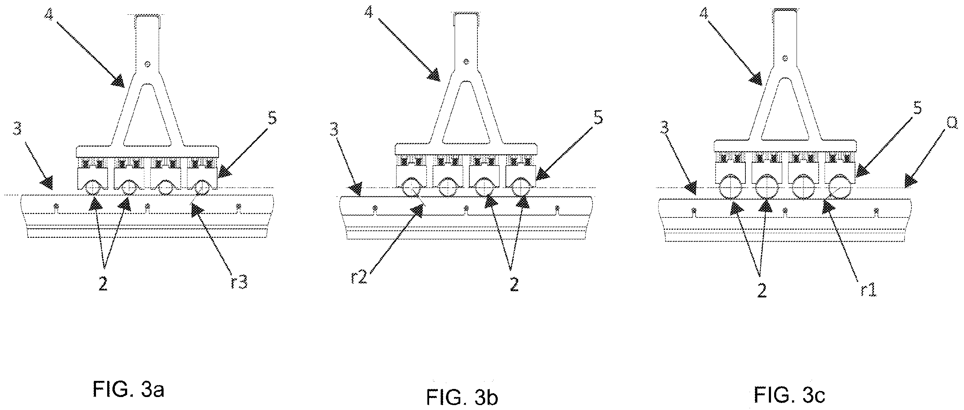

In use, as clearly illustrated in Figures 3a, 3b, 3c the central axis of the pipes 2 remains on the machine 1 always at the same height Q, regardless of the actual diameter of the pipes 2 being processed.

In order to keep constant the height Q of the central axis of the pipes 2, during the passage between different diameters of pipe being processed, the supporting surface 3 is moved vertically, that is, according to the third direction D3, and at the same time the positioning device 4 is moved by its vertical drive means.

The above-mentioned and not illustrated vertical drive means of the positioning device 4 are advantageously designed to transfer vertically, that is, according to the third direction D3, all the set of racks 7, in such a way as to adjust the position of the gripping elements 5 with respect to the diameter of the pipes 2 being processed on the machine 1.

By way of example, with reference to Figures 3a and 3b, when changing the processing from the pipes 2 with smaller r1 illustrated in Figure 3a to the pipes 2 of larger radius r2 illustrated in Figure 3b, the supporting surface 3 is lowered by a height equivalent to the difference r2-r1 between the two above-mentioned radiuses, whilst the positioning device is raised by a height such as to compensate not only for the difference between the radiuses r2, r1 but also the different positioning of the respective centres of curvature s1, s2 with respect to the vertex V of the profile P.

In other words, during the passage from a diameter of pipe 2 being processed to another different, for example, larger diameter, if the lowering of the supporting surface 3 is substantially equal to the difference between the respective larger and smaller radiuses, during the raising of gripping element 5 it is necessary to take into account not only the difference of the above-mentioned radiuses but also the distance along the axis A1 of symmetry between the respective centres of curvature of the two larger and smaller diameters, as shown in Figure 6.

The positioning device according to the invention achieves the preset aims and brings important advantages.

A first advantage is due to the speed and simplicity with which it is possible to carry out a change of size of the pipe being processed.

In fact, with the change of the diameter of the pipe being processed, if the new format of pipe corresponds to the radius of curvature of one between the various circular arcs present in the profile of the gripping element, it is sufficient to adjust the positioning in height of the rack in which the gripping elements are installed to adapt the machine to the new format. Taking into account that, usually, in order to create accessibility in front of the operating stations for format changeover and/or maintenance, the entire group comprising the positioning devices is installed on a mobile structure in a vertical direction, the layout of the gripping elements according to the invention does not entail constructional complications for the machine, since the setting of the position in height of the gripping elements is easily obtainable by controlling the height of the entire group comprising the positioning device for the pipes.

In other words, since the belling machines already have a movement of the positioning devices (to allow access to the operating stations), the positioning device according to the invention requires, for the relative operation, simply an accurate adjustment of the elements used for the vertical movement described above.

A further advantage is connected to the use of a strip made of a material with a high coefficient of friction and, advantageously, made of an elastomer material.

The use of an elastomer strip, thanks to its high coefficient of friction in the contact with the plastic of the pipe, advantageously allows, in fact, a reduction in the thrust force which the devices for moving and positioning the pipe must apply on the pipe to generate a gripping force sufficient to keep stable the longitudinal and angular position during its movement. With a smaller thrust force, the circumferential flattening which the pipe undergoes is also less and, consequently, the quality of the shape of the pipe is better preserved.

With a smaller force the resistance to sliding which is created between the pipe and the horizontal sliding plane is also less, thereby also improving the surface quality of the pipe processed.

In short, the strip made of a material with a high friction coefficient accentuates the friction on the pipe and makes the locking more secure. Moreover, since the strip, which is advantageously made of elastomer material, deforms elastically, it maintains the multi-diameter shape characteristic of the gripping element and also adapts to the sometimes oval shape of the extruded pipe.

The above-mentioned thrust force can be adjusted by means of the above-mentioned vertical drive means of the positioning device which engage and disengage the gripping elements with the pipe. Advantageously, the elastic connection between the gripping elements and the racks simplifies considerably the control of the actual thrust force on the pipe, as it is able to assess the elastic reaction of the springs used, according to their deformation.

## Claims

1. A positioning device for positioning pipes (2) made of plastic material, configured for picking up said pipes (2) and transferring them from a first predetermined position to a second predetermined position keeping the pipes (2) parallel with one another and in a first predetermined direction (D1), said positioning device comprising a plurality of gripping elements (5) designed to engage by gripping with the pipes (2) to retain them during the transfer, each of the gripping elements (5) being designed to engage at the top with one of the pipes (2), **characterised in that** each of the gripping elements (5) has a contact portion (6) having a concave shape with a saddle and a profile (P) defined by a series of circular arcs (C1, C2, C3) which have different radiuses of curvature (r1, r2, r3).

2. The positioning device according to claim 1, wherein said profile (P) of said contact portion (6) has a vertical axis (A1) of symmetry, **characterised in that**, in the succession, circular arcs (C1, C2, C3) of the same radius (r1, r2, r3) of curvature are positioned in symmetrical pairs relative to the axis (A1) of symmetry.

3. The positioning device according to claim 2, **characterised in that** the circular arcs (C1, C2, C3) of the same radius (r1, r2, r3) of curvature of said symmetrical pairs have a common centre (s1, s2, s3) of curvature.

4. The positioning device according to claim 3, **characterised in that** the centres (s1, s2, s3) of curvature of the circular arcs (C1, C2, C3) of said symmetrical pairs having different radiuses of curvature (r1, r2, r3) lie on said vertical axis (A1) of symmetry at different heights.

5. The positioning device according to claim 4, wherein said profile (P) of said contact portion (6) has an upper vertex (V), **characterised in that** the distance from the upper vertex of said centres (s1, s2, s3) of curvature of the circular arcs (C1, C2, C3) of the symmetrical pairs having different radiuses of curvature (r1, r2, r3) increases with the increase of the respective radius (r1, r2, r3) of curvature.

6. The positioning device according to any one of claims 1 to 5, **characterised in that**, along said profile (P) of the contact portion (6), the gripping element (5) has a strip (9) of a material with a high friction coefficient.

7. The positioning device according to claim 6, **characterised in that** said gripping element (5) has, extending along the said profile (P), a recess (8) for housing at least partly the strip (9) of a material with a high friction coefficient.

8. The positioning device according to any one of the preceding claims, **characterised in that** it comprises at least one rack (7) for supporting a plurality of said gripping elements (5), the gripping elements (5) being elastically mounted on said rack (7).

9. The positioning device according to any one of claims 1 to 8, **characterised in that** it comprises vertical drive means configured to adjust the position of said gripping elements (5) with respect to the diameter of the pipes (2) being processed.

10. A machine for processing pipes (2) made of thermoplastic material, **characterised in that** it comprises a positioning device according to any one of claims 1 to 9.

## Patentansprüche

1. Positionierungsvorrichtung zur Positionierung von Rohren (2), bestehend aus Kunststoffmaterial, ausgelegt, um die Rohre (2) aufzunehmen und sie von einer ersten vorgegebenen Position an eine zweite vorgegebene Position zu übergeben, wobei die Rohre (2) zueinander parallel und in einer ersten vorgegebenen Richtung (D1) gehalten werden, wobei die Positionierungsvorrichtung eine Vielzahl von Greifelementen (5) umfasst, die ausgelegt sind, um mit den Rohren (2) durch Greifen in Eingriff zu gelangen, um sie während der Übergabe zu halten, wobei ein jedes der Greifelemente (5) ausgestaltet ist, um an der Oberseite mit einem der Rohre (2) in Eingriff zu gelangen, **dadurch gekennzeichnet, dass** ein jedes der Greifelemente (5) einen Kontaktabschnitt (6) aufweist, aufweisend eine konkave Form mit einem Sattel und einem Profil (P), definiert durch eine Reihe von Rundbögen (C1, C2, C3), die unterschiedliche Krümmungsradien (r1, r2, r3) aufweisen.

2. Positionierungsvorrichtung nach Anspruch 1, wobei das Profil (P) des Kontaktabschnitts (6) eine vertikale Symmetrieachse (A1) aufweist, **dadurch gekennzeichnet, dass** Rundbögen (C1, C2, C3) mit demselben Krümmungsradius (r1, r2, r3) in symmetrischen Paaren relativ zur Symmetrieachse (A1) nacheinander positioniert sind.

3. Positionierungsvorrichtung nach Anspruch 2, **dadurch gekennzeichnet, dass** die Rundbögen (C1, C2, C3) mit demselben Krümmungsradius (r1, r2, r3) der symmetrischen Paare einen gemeinsamen Krümmungsmittelpunkt (s1, s2, s3) aufweisen.

4. Positionierungsvorrichtung nach Anspruch 3, **dadurch gekennzeichnet, dass** Krümmungsmittelpunkte (s1, s2, s3) der Rundbögen (C1, C2, C3) der symmetrischen Paare, die unterschiedliche Krümmungsradien (r1, r2, r3) aufweisen, auf der vertikalen Symmetrieachse (A1) in unterschiedlichen Höhen liegen.

5. Positionierungsvorrichtung nach Anspruch 4, wobei das Profil (P) des Kontaktabschnitts (6) einen oberen Scheitel (V) besitzt, **dadurch gekennzeichnet, dass** der Abstand der Krümmungsmittelpunkte (s1, s2, s3) der Rundbögen (C1, C2, C3) der symmetrischen Paare, die unterschiedliche Krümmungsradien (r1, r2, r3) aufweisen, vom oberen Scheitel mit der Zunahme des jeweiligen Krümmungsradius (r1, r2, r3) zunimmt.

6. Positionierungsvorrichtung nach einem der Ansprüche 1 bis 5, **dadurch gekennzeichnet, dass** das Greifelement (5) entlang des Profils (P) des Kontaktabschnitts (6) einen Streifen (9) eines Materials mit einem hohen Reibungskoeffizienten aufweist.

7. Positionierungsvorrichtung nach Anspruch 6, **dadurch gekennzeichnet, dass** das Greifelement (5) eine Vertiefung (8) aufweist, die sich entlang des Profils (P) erstreckt, um den Streifen (9) eines Materials mit einem hohen Reibungskoeffizienten mindestens teilweise aufzunehmen.

8. Positionierungsvorrichtung nach einem der vorhergehenden Ansprüche, **dadurch gekennzeichnet, dass** sie mindestens einen Ständer (7) umfasst, um eine Vielzahl der Greifelemente (5) zu tragen, wobei die Greifelemente (5) elastisch auf dem Ständer (7) montiert sind.

9. Positionierungsvorrichtung nach einem der Ansprüche 1 bis 8, **dadurch gekennzeichnet, dass** sie vertikale Antriebsmittel umfasst, die ausgelegt sind, um die Position der Greifelemente (5) in Bezug auf den Durchmesser der bearbeiteten Rohre (2) anzupassen.

10. Maschine zur Bearbeitung von Rohren (2), die aus Thermoplastmaterial bestehen, **dadurch gekennzeichnet, dass** sie eine Positionierungsvorrichtung nach einem der Ansprüche 1 bis 9 umfasst.

## Revendications

1. Dispositif de positionnement destiné à positionner des tuyaux (2) en matière plastique, configuré pour saisir lesdits tuyaux (2) et les transférer d'une première position prédéterminée à une seconde position prédéterminée en maintenant les tuyaux (2) parallèles les uns aux autres et dans une première direction prédéterminée (D1), ledit dispositif de positionnement comprenant une pluralité d'éléments de préhension (5) conçus pour se mettre en prise par préhension avec les tuyaux (2) pour les retenir pendant le transfert, chacun des éléments de préhension (5) étant conçu pour se mettre en prise au sommet avec l'un des tuyaux (2), **caractérisé en ce que** chacun des éléments de préhension (5) comporte une partie de contact (6) ayant une forme concave avec une selle et un profil (P) défini par une série d'arcs de cercle (C1, C2, C3) qui comportent différents rayons de courbure (r1, r2, r3).

2. Dispositif de positionnement selon la revendication 1, dans lequel ledit profil (P) de ladite partie de contact (6) comporte un axe vertical (A1) de symétrie, **caractérisé en ce que**, dans la succession, des arcs de cercle (C1, C2, C3) de même rayon (r1, r2, r3) de courbure sont positionnés par paires symétriques par rapport à l'axe (A1) de symétrie.

3. Dispositif de positionnement selon la revendication 2, **caractérisé en ce que** les arcs de cercle (C1, C2, C3) de même rayon (r1, r2, r3) de courbure desdites paires symétriques comportent un centre de courbure (s1, s2, s3) commun.

4. Dispositif de positionnement selon la revendication 3, **caractérisé en ce que** les centres (s1, s2, s3) de courbure des arcs de cercle (C1, C2, C3) desdites paires symétriques comportant des rayons de courbure (r1, r2, r3) différents reposent sur ledit axe vertical (A1) de symétrie à des hauteurs différentes.

5. Dispositif de positionnement selon la revendication 4, dans lequel ledit profil (P) de ladite partie de contact (6) comporte un sommet supérieur (V), **caractérisé en ce que** la distance à partir du sommet supérieur desdits centres (s1, s2, s3) de courbure des arcs circulaires (C1, C2, C3) des paires symétriques comportant des rayons de courbure différents (r1, r2, r3) augmente avec l'augmentation du rayon respectif (r1, r2, r3) de courbure.

6. Dispositif de positionnement selon l'une quelconque des revendications 1 à 5, **caractérisé en ce que**, le long dudit profil (P) de la partie de contact (6), l'élément de préhension (5) comporte une bande (9) d'un matériau à coefficient de frottement élevé.

7. Dispositif de positionnement selon la revendication 6, **caractérisé en ce que** ledit élément de préhension (5) comporte, en se prolongeant le long dudit profil (P), un renfoncement (8) pour loger au moins partiellement la bande (9) d'un matériau à coefficient de frottement élevé.

8. Dispositif de positionnement selon l'une quelconque des revendications précédentes, **caractérisé en ce qu'**il comprend au moins un support (7) pour supporter une pluralité desdits éléments de préhension (5), les éléments de préhension (5) étant montés élastiquement sur ledit support (7).

9. Dispositif de positionnement selon l'une quelconque des revendications 1 à 8, **caractérisé en ce qu'**il comprend des moyens d'entraînement verticaux configurés pour régler la position desdits éléments de préhension (5) par rapport au diamètre des tubes (2) en cours de traitement.

10. Machine de traitement de tubes (2) en matériau thermoplastique, **caractérisée en ce qu'**elle comprend un dispositif de positionnement selon l'une quelconque des revendications 1 à 9.
